# EUROPÄISCHE PATENTSCHRIFT

(11) **EP 2 886 326 B1**
(45) Veröffentlichungstag und Bekanntmachung des Hinweises auf die Patenterteilung: **28.06.2017**
(21) Anmeldenummer: 14196490.8
(22) Anmeldetag: 05.12.2014
(51) Int. Cl.: B32B 5/18, B29C 47/00, B32B 25/08, B32B 27/32, B32B 27/40

(54) **Coextrusionsfolie sowie Verfahren zur Herstellung einer Coextrusionsfolie**
Coextrusion film and method for producing a coextrusion film
Film de coextrusion ainsi que procédé de fabrication d'un film de coextrusion

(30) Priorität: 23.12.2013 DE 102013114783
(43) Veröffentlichungstag der Anmeldung: 24.06.2015
(73) Patentinhaber: Mondi AG, 1030 Wien (AT)
(72) Erfinder: Sollmann, Henner, 48599 Gronau (DE); Dr. Bader, Herbert, 48356 Nordwalde (DE); Perick, Matthias, 48683 Ahaus-Altstätte (DE); Großmann, Marcel, 45309 Essen (DE)
(74) Vertreter: Lorenz, Bernd Ingo Thaddeus

(56) Entgegenhaltungen:
- EP-A1- 1 316 418
- EP-A1- 2 471 652

## Beschreibung

Die Erfindung betrifft eine Coextrusionsfolie mit einer Kernschicht aus thermoplastischem Elastomer sowie mit einer ersten Außenschicht und einer zweiten Außenschicht, die jeweils aus einem Polymer gebildet sind, welches eine geringere Elastizität als das thermoplastische Elastomer aufweist, wobei die Außenschichten jeweils eine Schichtdicke von weniger als 15 µm und durch Aufschäumen gebildete Hohlräume aufweist.

Die Coextrusionsfolie ist insbesondere als elastisches Material für Einweg-Hygieneprodukte vorgesehen und wird beispielsweise als elastischer Bund oder als elastisches Schlusselement an einer Windel eingesetzt. Obwohl bei einer solchen Anwendung hohe Anforderungen an das Dehnverhalten und die elastische Rückstellkraft gestellt werden, muss das Material vor dem Hintergrund der Stückzahlen entsprechender Einweg-Produkte möglichst kostengünstig sein.

Dabei ist zu beachten, dass für die genannten Anwendungen häufig mehrschichtige Laminate bereitgestellt werden, wobei die Coextrusionsfolie an einer Seite oder auch an beiden Seiten mit weiteren Schichten, insbesondere Deckschichten Nonwoven verbunden wird.

Eine Folie mit einer elastischen Kernschicht und nicht elastischen Außenschichten ist aus EP 0 500 590 B1 bekannt. Die Außenschichten sind relativ steif und bestehen beispielweise aus einem Polyolefin, insbesondere Polyethylen oder Polypropylen, einem Polyethylenterephthalat oder Polyacrylat. Die Außenschichten weisen eine Mikrotextur auf, die durch Verstrecken des Schichtstoffes über die Elastizitätsgrenze der Außenschichten hinaus erzeugt worden ist. Die Mikrotextur besteht aus kleinen Falten, die sich bei einer elastischen Rückstellung der Folie nach der Verstreckung ausbilden, wobei die Ausrichtung der Falten abhängig ist von der Verstreckungsrichtung. Die Folie kann uniaxial oder auch biaxial verstreckt werden. Die Mikrotextur wird als aufgeraute, weiche Oberflächentextur wahrgenommen.

Aus EP 1 316 418 A1 ist eine Coextrusionsfolie bekannt, welche eine Kernschicht aus thermoplastischem Elastomer und Außenschichten aus einem weniger elastischen Material aufweist. Die Außenschichten bestehen aus einem thermoplastischen Kunststoff mit einem spröde verfestigten Molekülverband, der sich unter Anwendung einer Dehnkraft nur wenig dehnt und bei Überschreiten einer vorgegebenen Reißkraft übergangslos reißt. Der spröde, verfestigte Molekülverband wird durch eine als Aktivierung bezeichnete unaxiale Verreckung quer zur Extrusionsrichtung irreversibel aufgebrochen. Dadurch ist die Coextrusionsfolie quer zur Extrusionsrichtung elastisch dehnbar. Die Außenschichten können aus einem durch Nachbehandlung versprödeten Polyolefin, einer Mischung aus Polyolefin und Polystyrol oder einer Mischung aus Polyolefin, Polystyrol und Ethylen-Vinyl-Acetat bestehen. In Extrusionsrichtung, die auch Maschinenrichtung bezeichnet wird, bleibt der spröde verfestigte Molekülverband erhalten und versteift das Material. Der Schichtverbund weist keine Elastizität in Maschinenrichtung auf.

Eine Coextrusionsfolie mit den eingangs beschriebenen Merkmalen ist aus EP 2 471 652 A1 bekannt. Die Coextrusionsfolie weist in den Deckschichten durch Aufschäumen und nachträgliches Dehnen gebildete Poren auf. Durch eine Verstreckung der Coextrusionsfolie, die auch als Aktivierung bezeichnet wird, erhält die Coextrusionsfolie elastische Eigenschaften und zugleich eine texturierte Deckschicht. Die Poren in der Deckschicht verbessern die elastischen Eigenschaften der Coextrusionsfolie, welche nach ihrer Aktivierung weitgehend reversibel dehnbar ist. Durch die Poren ergibt sich auch eine matte, ungleichmäßige Oberfläche.

Der vorliegenden Erfindung liegt die Aufgabe zugrunde, eine Coextrusionsfolie anzugeben, welche sich durch eine besonders geringe Dehnkraft bei einer ersten Dehnung und gute, gleichmäßige mechanische Eigenschaften auszeichnet.

Ausgehend von einer gattungsgemäßen Coextrusionsfolie wird die Aufgabe erfindungsgemäß dadurch gelöst, dass die aufgeschäumten Außenschichten eine Dichte von weniger als 0,800 g/cm³ und dass pro 1 Kubikmillimeter (mm³) Volumen mehr als 500, insbesondere mehr als 1000 Hohlräume aufweisen.

Erfindungsgemäß soll also eine besonders gleichmäßige Struktur mit sehr vielen, kleinen Hohlräumen bereitgestellt werden. Der Erfindung liegt dabei die Erkenntnis zugrunde, dass gerade für das erstmalige Dehnen der Coextrusionsfolie die Struktur der aufgeschäumten Außenschichten von besonderer Bedeutung ist. Erfindungsgemäß sind die Außenschichten auch bei einer Messung vor einem erstmaligen Dehnen, also einer Aktivierung, zumindest soweit aufgeschäumt, dass die Dichte weniger als 0,800 g/cm³, vorzugsweise weniger als 0,700 g/cm³ beträgt.

Ausgehend von den üblichen Polymer-Materialien für die Außenschichten wie insbesondere Polyolefin ergibt sich also eine Dichtereduktion von mindestens 15 %, bevorzugt mindestens 25 %.

Gleichzeitig sind die Hohlräume relativ klein und gleichmäßig in den Außenschichten verteilt. Dies führt dazu, dass bei dem Ausüben einer Zugkraft das Material mit den Hohlräumen und den dazwischen angeordneten Stegen aus Polymermaterial ähnlich wie ein Netz alleine aufgrund seiner Struktur in einem gewissen Maße dehnbar ist. Bei einem erstmaligen Dehnen sind also gerade zu Beginn nur vergleichsweise geringe Kräfte notwendig.

Während direkt zu Beginn der Dehnung die Außenschichten mit ihren Hohlräumen gewissermaßen langgezogen werden, wird das Polymer der Außenschichten nachfolgend plastisch gedehnt oder auch bereichsweise zerrissen. Auch bei der plastischen Dehnung ergibt sich der Vorteil, dass hier durch die gleichmäßige Verteilung kleiner Hohlräume einzelne vergleichsweise dünne Stränge des Polymers der Außenschichten langgezogen werden.

Schließlich ergibt sich auch der Vorteil, dass aufgrund der besonders kleinzelligen, gleichmäßigen Struktur der Hohlräume das Zerreißen der Außenschichten über einen besonders weiten Dehnungsbereich erfolgt, wenn also ein Hohlraum aufgerissen wird, erhalten die Außenschichten dort lokal zunächst eine gewisse Beweglichkeit, weshalb unmittelbar angrenzende Hohlräume häufig erst deutlich später zerrissen werden. Auch dieser Umstand führt dazu, dass gerade zu Beginn einer erstmaligen Dehnung ein gemäß dem Stand der Technik unbekanntes, weiches Verhalten des Materials erreicht wird.

Hinsichtlich der Dehnungseigenschaften ergeben sich damit im Rahmen der Erfindung mehrere Vorteile. Zunächst kann die auch als Aktivierung bezeichnete erstmalige Dehnung leichter und besser kontrolliert erfolgen. Je nach Anwendungsfall ist es auch möglich, auf eine erstmalige Dehnung komplett zu verzichten. Ein Benutzer wird zwar einen deutlich erhöhten Widerstand bei einer erstmaligen Dehnung feststellen, jedoch ist die Coextrusionsfolie alleine oder in einem Schichtverbund mit aufkaschierten Nonwoven-Schichten weniger steif, so dass der Benutzer auch die nicht aktivierte Coextrusionsfolie als dehnbar erkennt und entsprechend handhaben wird.

Darüber hinaus wird im Rahmen der Erfindung auch die Haptik der Außenschichten weiter verbessert. Es entsteht eine besonders weiche, angenehme Oberfläche. Je nach Anwendungsfall kommt damit auch in Betracht, aus Kostengründen an zumindest einer Seite der Coextrusionsfolie auf die Kaschierung mit einem Nonwoven-Material zu verzichten, welches üblicherweise vorgesehen wird, um eine sehr weiche, hautschonende Struktur mit einem textilen Charakter bereitzustellen. Zusätzlich führt die besonders gleichmäßige Struktur auch dazu, dass die Außenschichten besonders leicht bei einer Kaschierung mit weiteren Schichten verklebt werden können.

Die Hohlräume können sowohl als geschlossene Zellen, als offenzellige Struktur oder in einer Mischform vorliegen.

Bei einer offenzelligen Struktur gehen benachbarte Hohlräume teilweise ineinander über. Als ein Hohlraum ist dann ein im Wesentlichen konvexer, zellenförmiger Freiraum bezeichnet.

Gemäß einer bevorzugten Ausgestaltung der Erfindung weisen die Außenschichten pro 1 mm³ Volumen mehr als 2500, besonders bevorzugt mehr als 10000 Hohlräume auf. Die Hohlräume können bei einer Draufsicht auf die Coextrusionsfolie zum Teil auch übereinander angeordnet sein.

Um im Rahmen der Erfindung die besonders kleinen und gleichmäßig verteilten Hohlräume erzeugen zu können, werden für die Herstellung der Außenschichten der Coextrusionsfolie spezielle Verfahren eingesetzt. Dabei muss erreicht werden, dass unmittelbar nach dem Austritt des schmelzflüssigen Kunststoffs aus der Coextrusionsdüse schlagartig sehr viele, kleine Hohlräume gleichzeitig erzeugt werden, wobei dann die Coextrusionsfolie auch erstarren muss, bevor die kleinen Hohlräume sich vereinigen können. Um dies zu erreichen, kann ein Herstellungsverfahren vorgesehen sein, bei dem in einem ersten Extruder eine Kunststoffschmelze des thermoplastischen Elastomers für die Kernschicht bereitgestellt wird, in einem zweiten Extruder die Kunststoffschmelze einer thermoplastischen Grundsubstanz für zumindest eine der Außenschichten bereitgestellt wird, wobei der thermoplastischen Grundsubstanz in dem zweiten Extruder ein flüssiges und/oder gasförmiges Treibmittel mit einem Druck zwischen 35 und 75 bar zugegeben wird und wobei das Treibmittel durch den Druckabfall nach dem Austritt aus einer Coextrusionsdüse expandiert und eine homogene Verteilung der Hohlräume in der entsprechenden Außenschicht bewirkt.

Durch den hohen Druck des Treibmittels wird dieses in der thermoplastischen Grundsubstanz dispergiert und auch in einem gewissen Maße in der Polymerschmelze gelöst.

Als Treibmittel kommen insbesondere Kohlendioxid und Stickstoff in Betracht, wobei das Treibmittel besonders bevorzugt in einem Dampf-Flüssigkeits-Gleichgewicht als superkritisches Fluid in den Extruder eingebracht wird. Durch die Bereitstellung des Treibmittels in einem superkritischen Zustand verhält sich dieses im Wesentlichen inkompressibel und kann dennoch vergleichsweise gut in der Polymerschmelze gelöst werden. Durch den Druckabfall nach dem Düsenaustritt expandiert das Treibmittel schlagartig und bildet die besonders homogene und feine Verteilung der Hohlräume.

Um die Bildung möglichst vieler, kleiner Hohlräume zu unterstützen, kann der thermoplastischen Grundsubstanz ein Füllstoff in Form von Partikeln als Nukleierungsmittel zugegeben werden. Bei dem Nukleierungsmittel handelt es sich vorzugsweise um anorganische Festkörperpartikel wie Talkum, welche als Pulver bereitgestellt werden. Die einzelnen, gleichmäßig in der thermoplastischen Grundsubstanz verteilten Partikel erleichtern lokal die Bildung eines Hohlraumes nach dem Austritt aus dem Düsenspalt.

Erfindungsgemäß weisen beiden Außenschichten kleine, gleichmäßig verteilte Hohlräume auf. Ausgehend von dem zuvor beschriebenen Verfahren kann also die thermoplastische Grundsubstanz aus dem zweiten Extruder vor der Coextrusionsdüse aufgeteilt werden, um die beiden Außenschichten zu bilden. Alternativ kann auch ein dritter Extruder vorgesehen sein, wobei dann die beiden Außenschichten aus separat zugeführten thermoplastischen Grundsubstanzen gebildet werden. Im Rahmen einer solchen Ausgestaltung besteht auch die Möglichkeit, unterschiedliche Materialien für beide Außenschichten einzusetzen.

Entgegen dem Ansatz, möglichst geringe Herstellungskosten zu ermöglichen, wird im Rahmen der Erfindung ein vergleichsweise aufwendiges und damit kostenintensives Verfahren zur Herstellung der Coextrusionsfolie eingesetzt. Der Erfindung liegt aber vor diesem Hintergrund die Erkenntnis zugrunde, dass gerade durch eine speziell ausgewählte, besonders feine Verteilung und Struktur der Hohlräume in den Außenschichten eine erhebliche, unerwartete Verbesserung der mechanischen Eigenschaften erreicht werden kann.

Die Schichtdicke der Außenschichten liegt vorzugsweise zwischen 0,5 und 10 µm, während die Kernschicht beispielsweise eine Dicke zwischen 15 und 150 µm aufweist.

Grundsätzlich können im Rahmen der Erfindung noch weitere Zwischenschichten zwischen den beiden Außenschichten und der Kernschicht angeordnet sein. Vorzugsweise bezieht sich die vorliegende Erfindung jedoch auf eine dreischichtige Coextrusionsfolie, welche ausschließlich aus den beiden Außenschichten und der Kernschicht besteht. Entsprechend beträgt die Dicke der gesamten Extrusionsfolie typischerweise zwischen etwa 20 und 180 µm.

Die Außenschichten weisen als thermoplastische Grundsubstanz vorzugsweise Polyolefin auf. Besonders geeignet ist eine Mischung aus Polyethylen und Polypropylen, welche zäh dehnbar ist.

Als thermoplastisches Elastomer kommen insbesondere Styrol-Block-Copolymere, thermoplastisches Polyurethan und polyolefinische Block-Copolymere mit elastischen Eigenschaften in Betracht. Zu den Styrol-Block-Copolymeren zählen insbesondere Styrol-Isopren-Styrol-Block-Copolymere (SIS), Styrol-Butadien-Styrol-Copolymer (SBS), Styrol-Ethenebuthen-Styrol-Copolymer (SEBS), Styrol-Isopren-Butadien-Copolymer (SIBS) und Styrol-Ethenepropen-Styrol-Copolymer (SEPS), welche auch in Mischung eingesetzt werden können.

Die besonders vorteilhaften Eigenschaften der Coextrusionsfolie wirken sich unmittelbar auf die Dehnung und insbesondere eine erstmalige Dehnung (Aktivierung) aus. Zunächst ist die Coextrusionsfolie ausgehend von dem ungedehnten Zustand nach der Herstellung in Produktionsrichtung und/oder Querrichtung um zumindest 100 %, besonders bevorzugt zumindest 200 % dehnbar.

Die Prüfung der Dehnungseigenschaften kann beispielsweise dadurch erfolgen, dass die Coextrusionsfolie bei einer erstmaligen Dehnung um 150 % gedehnt und damit aktiviert wird. Der irreversible Anteil der Dehnung, also die Längenänderung zwischen der ungedehnten Folie und der einmal gedehnten Folie, beträgt vorzugsweise weniger als 20 %, besonders bevorzugt weniger als 10 %.

Die Coextrusionsfolie zeichnet sich erfindungsgemäß gerade dadurch aus, dass für ein erstmaliges Dehnen vergleichsweise geringe Kräfte notwendig sind. Selbstverständlich sind die Dehnungskräfte bei einer erstmaligen Dehnung höher als bei nachfolgenden Dehnungen. Gemäß einer bevorzugten Ausgestaltung der Erfindung ist jedoch vorgesehen, dass das in Produktionsrichtung und/oder in Querrichtung bestimmte Verhältnis der bis zu einer Dehnung von 100 % aufgewendeten Dehnarbeit bei einer erstmaligen Dehnung (Aktivierung) um 150 % und einer nachfolgenden zweiten Dehnung kleiner als 2:1 ist.

Die besonders leichte Dehnbarkeit spiegelt sich nicht nur in der Dehnarbeit, also dem Integral der Dehnkraft über den Weg, sondern auch in der Dehnkraft selbst wieder. Entsprechend erfüllt die erfindungsgemäße Coextrusionsfolie auch die Vorgabe, dass das in Produktionsrichtung und/oder in Querrichtung bestimmte Verhältnis der bei einer Dehnung von 100 % bestimmten Dehnkraft bei einer erstmaligen Dehnung (Aktivierung) um 150 % und einer nachfolgenden zweiten Dehnung kleiner als 3:2 ist.

Die im Rahmen der Erfindung hergestellte Coextrusionsfolie kann auch ohne Weiteres aufgerollt werden. Obwohl die Materialien der Kernschicht in der Regel eine hohe Klebrigkeit aufweisen und damit zum Verblocken neigen, kann die erfindungsgemäße Coextrusionsfolie auch nach einer längeren Lagerdauer von einer Rolle abgezogen und verarbeitet werden. Die aufgeschäumten Außenschichten dienen sowohl im aktivierten als auch im unaktivierten Zustand als Abstandhalter, wobei durch die Aktivierung eine zusätzliche Oberflächenvergrößerung erreicht wird.

Die Verarbeitungstemperaturen der beschriebenen Materialien für die Kernschicht und die Außenschichten liegt typischerweise zwischen 150 °C und 230 °C.

Gemäß einem Beispiel wurde eine dreischichtige Coextrusionsfolie mit einer Gesamtdicke von 56 µm durch Castfolienextrusion gebildet. Bei einem symmetrischen Aufbau weisen die beiden Außenschichten eine Schichtdicke von 8 µm auf, wobei die Volumenzunahme im Vergleich zu einer ungeschäumten, kompakten Schicht 33 % beträgt. Die Außenschichten sind aus einer Mischung von Polyethylen und Polypropylen gebildet und enthalten Talkum als Nukleierungsmittel. Die Kernschicht ist dagegen mit einer Schichtdicke von 40 µm aus einem Styrol-Block-Copolymer gebildet. Die Coextrusion mit dem Aufschäumen der Außenschichten erfolgte nach dem von der Trexel Inc. entwickelten "MuCell-Verfahren". Die Coextrusionsfolie zeichnet sich durch besonders niedrige Erstdehnkräfte und gute mechanische Eigenschaften aus. Die Oberfläche der Coextrusionsfolie wirkt gleichmäßig und weich.

Die Erfindung wird im Folgenden anhand von Zeichnungen erläutert. Es zeigen:
- Fig. 1: eine schematische Darstellung der erfindungsgemäßen Coextrusionsfolie,
- Fig. 2: ein Dehnungsdiagramm, welches die Dehnung der Coextrusionsfolie in Produktionsrichtung (Maschinenrichtung) zeigt.

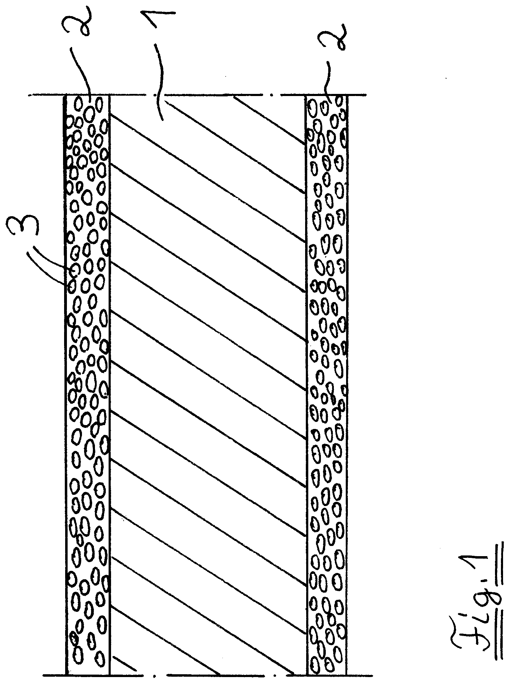

Die Fig. 1 zeigt eine Coextrusionsfolie mit einer Kernschicht 1 aus thermoplastischem Elastomer sowie mit Außenschichten 2, die jeweils aus einem Polymer gebildet sind, welches eine geringere Elastizität als das thermoplastische Elastomer aufweist. In dem dargestellten Ausführungsbeispiel ist das Verhältnis der Schichtdicke eine der Außenschichten 2 zu der Dicke der Kernschicht zwischen 1:3 und 1:10, insbesondere 1:5. Die Außenschichten 2 können bei einem symmetrischen Schichtaufbau beispielsweise eine Dicke von 8 µm aufweisen, während die Dicke der Kernschicht 1 40 µm beträgt.

In der Fig. 1 ist des Weiteren zu erkennen, dass beide Außenschichten 2 durch Aufschäumen gebildete Hohlräume 3 aufweisen.

Erfindungsgemäß sind die vorzugsweise aus Polyolefin, insbesondere einer Mischung aus PE und PP gebildeten Außenschichten soweit aufgeschäumt, dass die Dichte weniger als 0,800 g/cm³, insbesondere weniger als 0,700 g/cm³ beträgt. Des Weiteren ist zu erkennen, dass die Hohlräume 3 klein und gleichmäßig in den Außenschichten 2 verteilt sind. So weisen die Außenschicht 2 pro 1 mm³ Volumen mehr als 500 Hohlräume 3, vorzugsweise mehr als 1000 Hohlräume 3 und besonders bevorzugt mehr als 5000 Hohlräume 3 auf.

Um die Bildung der besonders kleinen und gleichmäßig verteilten Hohlräume 3 zu erleichtern, enthält die thermoplastische Grundsubstanz der Außenschichten 2 einen Füllstoff in Form von Partikeln als Nukleierungsmittel, wobei insbesondere Talkum als Nukleierungsmittel in Betracht kommt.

Die Kernschicht 1 besteht aus einem Styrol-Block-Copolymer als thermoplastischem Elastomer.

Durch die feine Verteilung der Hohlräume 3 sind die gesamten, im Ausführungsbeispiel lediglich 8 µm dicken Außenschichten 2 besonders leicht dehnbar. Bei einer erstmaligen Dehnung können die Außenschichten 2 in einem gewissen Maße zunächst langgezogen werden, bis sich das polymere Material zwischen den Hohlräumen 3 plastisch verformt und schließlich einzelne Bereiche aufreißen können. Gerade ein solches Aufreißen erfolgt bei einer ersten Dehnung über einen relativ großen Wegbereich.

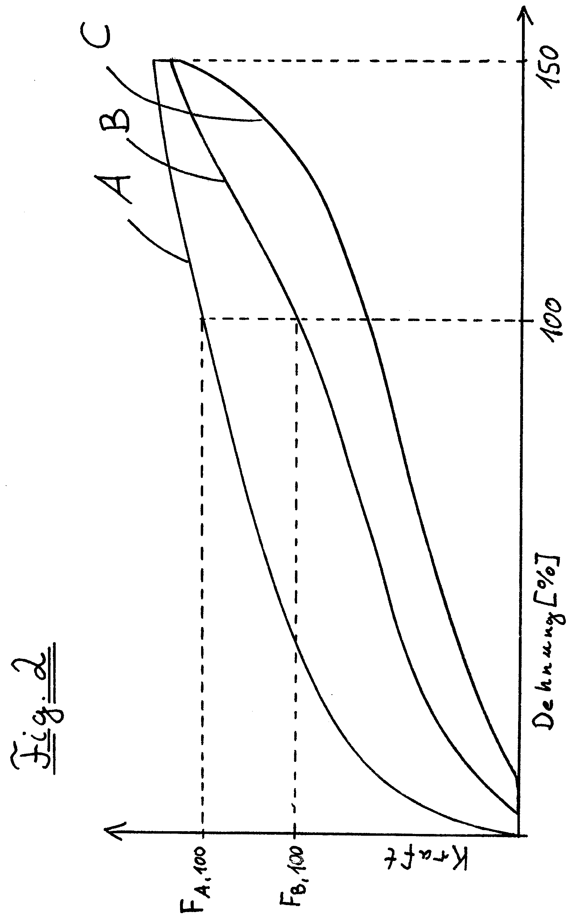

Davon ausgehend zeigt die Fig. 2 exemplarisch ein Kraft-Dehnungsdiagramm. Aufgetragen ist die Dehnungskraft in Abhängigkeit der Dehnung der Coextrusionsfolie in %. Die Kurve A zeigt den Dehnungskraftverlauf bei einer erstmaligen Verstreckung der Coextrusionsfolie nach ihrer Produktion, wobei diese erstmalige Dehnung auch als Aktivierung bezeichnet wird. Bei der erstmaligen Dehnung wird die Coextrusionsfolie ausgehend von ihrer ursprünglichen Länge um 150 % gedehnt, wobei die Kurve C den Dehnungskraftverlauf der Coextrusionsfolie bei ihrer Rückstellung bzw. Rückdehnung zeigt.

Die Kurve B zeigt davon ausgehend den Dehnungskraftverlauf für eine zweite Dehnung nach der Aktivierung.

Für eine erstmalige Dehnung (Kurve A) ist eine größere Kraft notwendig als für eine nachfolgende Dehnung (Kurve B). Allerdings ist der Unterschied bei der erfindungsgemäßen Coextrusionsfolie im Vergleich zu bekannten Ausgestaltungen relativ gering. So ist dem Verlauf der Kurve A zu entnehmen, dass gerade zu Beginn der Dehnung eine relativ leichte Verformung möglich ist. Während bei aus dem Stand der Technik bekannten Coextrusionsfolie ein sehr steiler, linearer Verlauf der Dehnungskraft beobachtet wird, kann die erfindungsgemäße Coextrusionsfolie relativ leicht aktiviert werden. So ist das in Produktionsrichtung und/oder in Querrichtung bestimmte Verhältnis der bis zu einer Dehnung von 100 % aufzuwendenden Dehnarbeit bei einer erstmaligen Dehnung (Kurve A) um 150 % und einer nachfolgenden zweiten Dehnung kleiner als 2:1. Bezogen auf die Fig. 2 werden also die Flächen unter den Kurven A und B verglichen, welche bis zu einem Wert von 100 % eingeschlossen werden.

Des Weiteren ist zu erkennen, dass das in Produktionsrichtung und/oder in Querrichtung bestimmte Verhältnis der bei einer Dehnung von 100 % bestimmten Dehnkraft bei einer erstmaligen Dehnung um 150 % und einer nachfolgenden zweiten Dehnung kleiner als 3:2 ist. Die entsprechenden relativen Werte können in der Fig. 2 als F_{A,100} und F_{B,100} abgelesen werden.

## Patentansprüche

1. Coextrusionsfolie mit einer Kernschicht (1) aus thermoplastischem Elastomer sowie mit einer ersten Außenschicht (2) und einer zweiten Außenschicht (2), die jeweils aus einem Polymer gebildet sind, welches eine geringere Elastizität als das thermoplastische Elastomer aufweist, wobei die Außenschichten (2) jeweils eine Schichtdicke von weniger als 15 µm und durch Aufschäumen gebildete Hohlräume (3) aufweisen, **dadurch gekennzeichnet, dass** die Dichte der aufgeschäumten Außenschichten (2) weniger als 0,800 g/cm³ beträgt und dass die Außenschichten (2) pro 1 Kubikmillimeter (mm³) Volumen mehr als 500 Hohlräume aufweisen.

2. Coextrusionsfolie nach Anspruch 1, **dadurch gekennzeichnet, dass** die Außenschichten (2) pro 1 mm³ Volumen mehr als 1000 Hohlräume aufweisen.

3. Coextrusionsfolie nach Anspruch 1 oder 2, **dadurch gekennzeichnet, dass** die Dichte der Außenschichten (2) weniger als 0,7 g/cm³ beträgt.

4. Coextrusionsfolie nach einem der Ansprüche 1 bis 3, **dadurch gekennzeichnet, dass** die Außenschichten (2) eine Schichtdicke zwischen 0,5 und 10 µm aufweisen.

5. Coextrusionsfolie nach einem der Ansprüche 1 bis 4, **dadurch gekennzeichnet, dass** die Kernschicht (1) eine Dicke zwischen 15 und 150 µm aufweist.

6. Coextrusionsfolie nach einem der Ansprüche 1 bis 5, **dadurch gekennzeichnet, dass** das thermoplastische Elastomer ausgewählt ist aus der Gruppe der Styrol-Block-Copolymere, thermoplastischen Polyurethan und polyolefinischem Block-Copolymer.

7. Coextrusionsfolie nach einem der Ansprüche 1 bis 6, **dadurch gekennzeichnet, dass** die Außenschichten (2) als thermoplastische Grundsubstanz Polyolefin, insbesondere einer Mischung aus Polyethylen und Polypropylen aufweisen.

8. Coextrusionsfolie nach einem der Ansprüche 1 bis 7, **dadurch gekennzeichnet, dass** die Außenschichten (2) einen Füllstoff in Form von Partikeln als Nukleierungsmittel enthalten.

9. Coextrusionsfolie nach einem der Ansprüche 1 bis 8, **dadurch gekennzeichnet, dass** das in Produktionsrichtung und/oder in Querrichtung bestimmte Verhältnis der bis zu einer Dehnung von 100 % aufgewendeten Dehnarbeit einer erstmaligen Dehnung um 150 % und einer nachfolgenden zweiten Dehnung kleiner als 2:1 ist.

10. Coextrusionsfolie nach einem der Ansprüche 1 bis 9, **dadurch gekennzeichnet, dass** das in Produktionsrichtung und/oder in Querrichtung bestimmte Verhältnis der bei einer Dehnung von 100 % bestimmten Dehnkraft bei einer erstmaligen Dehnung um 150 % und einer nachfolgenden zweiten Dehnung kleiner als 3:2 ist.

11. Verfahren zur Herstellung einer Coextrusionsfolie nach einem der Ansprüche 1 bis 10,
wobei in einem ersten Extruder eine Kunststoffschmelze des thermoplastischen Elastomers für die Kernschicht (1) bereitgestellt wird,
wobei in einem zweiten Extruder eine Kunststoffschmelze einer thermoplastischen Grundsubstanz für zumindest eine der Außenschichten (2) bereitgestellt wird,
wobei der thermoplastischen Grundsubstanz in dem zweiten Extruder ein flüssiges und/oder gasförmiges Treibmittel mit einem Druck zwischen 35 und 75 bar zugegeben wird und
wobei das Treibmittel durch den Druckabfall nach dem Austritt aus einer Coextrusionsdüse expandiert und eine homogene Verteilung von Hohlräumen (3) in der entsprechenden Außenschicht bewirkt.

12. Verfahren nach Anspruch 11, wobei der thermoplastischen Grundsubstanz für die zumindest eine Außenschicht (2) ein Nukleierungsmittel in Form von Partikeln zugegeben wird.

## Claims

1. A coextrusion film comprising a core layer (1) made of thermoplastic elastomer and comprising a first outer layer (2) and a second outer layer (2) each formed from a polymer having a lower elasticity than the thermoplastic elastomer, wherein the outer layers (2) each have a layer thickness of less than 15 µm and have cavities (3) formed by foaming, **characterized in that** the density of the foamed outer layers (2) is less than 0.800 g/cm³ and that the outer layers (2) each have more than 500 cavities per 1 cubic millimeter (mm³)of volume.

2. The coextrusion film according to claim 1, **characterized in that** the outer layers (2) have more than 1000 cavities per 1 mm³ of volume.

3. The coextrusion film according to claim 1 or 2, **characterized in that** the density of the outer layers (2) is less than 0.7 g/cm³.

4. The coextrusion film according to any one of claims 1 to 3, **characterized in that** the outer layers (2) have a thickness between 0.5 and 10 µm.

5. The coextrusion film according to any one of claims 1 to 4, **characterized in that** the core layer (1) has a thickness between 15 and 150 µm.

6. The coextrusion film according to any one of claims 1 to 5, **characterized in that** the thermoplastic elastomer is selected from the group of styrene block copolymers, thermoplastic polyurethane and polyolefinic block copolymer.

7. The coextrusion film according to any one of claims 1 to 6, **characterized in that** the outer layers (2) comprise a polyolefin as thermoplastic base substance, in particular a mixture of polyethylene and polypropylene.

8. The coextrusion film according to any one of claims 1 to 7, **characterized in that** the outer layers (2) contain a filler in the form of particles as a nucleating agent.

9. The coextrusion film according to any one of claims 1 to 8, **characterized in that** the ratio, determined in the production direction and/or in the transverse direction, of the stretching work of a first stretching by 150 % applied up to a stretching of 100 % and a subsequent second stretching is less than 2:1.

10. The coextrusion film according to any one of claims 1 to 9, **characterized in that** the ratio, determined in the production direction and/or in the transverse direction, of the stretching work of a first stretching by 150 % determined for a stretching of 100 % and a subsequent second stretching is less than 3:2.

11. A method for producing a coextrusion film according to any one of claims 1 to 10,
wherein in a first extruder a plastic melt of the thermoplastic elastomer is prepared for the core layer (1),
wherein in a second extruder a plastic melt of a thermoplastic base substance is prepared for at least one of the outer layers (2),
wherein a liquid and/or gaseous propellant having a pressure between 35 and 75 bar is added to the thermoplastic base substance in the second extruder and
wherein the propellant expands as a result of the pressure drop after exiting from a coextrusion nozzle and brings about a homogeneous distribution of cavities (3) in the corresponding outer layer.

12. The method according to claim 11, wherein a nucleating agent in the form of particles is added to the thermoplastic base substance for the at least one outer layer (2).

## Revendications

1. Film coextrudé comprenant une couche centrale (1) en élastomère thermoplastique ainsi qu'une première couche extérieure (2) et une seconde couche extérieure (2) qui sont respectivement fabriquées dans un polymère qui présente une élasticité inférieure à l'élastomère thermoplastique, dans lequel les couches extérieures (2) présentent respectivement une épaisseur de couche inférieure à 15µm et des cavités (3) formées par moussage, **caractérisé en ce que** l'épaisseur des couches extérieures (2) moussées est inférieure à 0,800 g/cm³ et que les couches extérieures (2) présentent plus de 500 cavités par 1 millimètre cube (mm³) de volume.

2. Film coextrudé selon la revendication 1, **caractérisé en ce que** les couches extérieures (2) présentent plus de 1000 cavités par 1 mm³ de volume.

3. Film coextrudé selon la revendication 1 ou 2, **caractérisé en ce que** l'épaisseur des couches extérieures (2) est inférieure à 0,7 g/cm³.

4. Film coextrudé selon l'une des revendications 1 à 3, **caractérisé en ce que** les couches extérieures (2) présentent une épaisseur de couche entre 0,5 et 10 µm.

5. Film coextrudé selon l'une des revendications 1 à 4, **caractérisé en ce que** la couche centrale (1) présente une épaisseur entre 15 et 150 µm.

6. Film coextrudé selon l'une des revendications 1 à 5, **caractérisé en ce que** l'élastomère thermoplastique est sélectionné parmi le groupe des styrènes copolymères blocs, du polyuréthane thermoplastique et du copolymère bloc polyoléfine.

7. Film coextrudé selon l'une des revendications 1 à 6, **caractérisé en ce que** les couches extérieures (2) présentent de la polyoléfine en tant que substance de base thermoplastique, en particulier un mélange de polyéthylène et de polypropylène.

8. Film coextrudé selon l'une des revendications 1 à 7, **caractérisé en ce que** les couches extérieures (2) contiennent une charge sous forme de particules en tant qu'agent de nucléation.

9. Film coextrudé selon l'une des revendications 1 à 8, **caractérisé en ce que** le rapport, défini dans le sens de production et/ou le sens transversal, du travail de dilatation déployé jusqu'à une dilatation de 100 % est de 150 % lors d'une première dilatation et est inférieur à 2:1 lors d'une seconde dilatation.

10. Film coextrudé selon l'une des revendications 1 à 9, **caractérisé en ce que** le rapport, défini dans le sens de production et/ou le sens transversal, de la force de dilatation définie à une dilatation de 100 % est de 150 % lors d'une première dilatation et est inférieur à 3:2 lors d'une seconde dilatation.

11. Procédé de fabrication d'un film coextrudé selon l'une des revendications 1 à 10,
dans lequel une fonte de plastique de l'élastomère thermoplastique pour la couche centrale (1) est préparée dans une première extrudeuse,
dans lequel une fonte de plastique d'une substance de base thermoplastique pour au moins une des couches extérieures (2) est préparée dans une seconde extrudeuse,
dans lequel un agent moussant liquide et/ou gazeux est ajouté à la substance de base thermoplastique dans la seconde extrudeuse, à une pression entre 35 et 75 bar, et
dans lequel l'agent moussant s'étend en sortie d'une buse de coextrusion du fait de la baisse de pression et a pour effet une répartition homogène de cavités (3) dans la couche extérieure correspondante.

12. Procédé selon la revendication 11, dans lequel un agent de nucléation sous forme de particules est ajouté à la substance de base thermoplastique pour l'au moins une couche extérieure (2).
